# EUROPÄISCHE PATENTSCHRIFT

(11) **EP 2 433 732 B1**
(45) Veröffentlichungstag und Bekanntmachung des Hinweises auf die Patenterteilung: **13.08.2014**
(21) Anmeldenummer: 11180121.3
(22) Anmeldetag: 06.09.2011
(51) Int. Cl.: B23D 47/04, B27B 31/00

(54) **Plattenaufteilanlage sowie Verfahren zu deren Betreiben**
Board partitioning device and method for operating same
Installation de distribution de plaques et son procédé de fonctionnement

(30) Priorität: 27.09.2010 DE 102010041486
(43) Veröffentlichungstag der Anmeldung: 28.03.2012
(73) Patentinhaber: HOLZMA Plattenaufteiltechnik GmbH, 75365 Calw-Holzbronn (DE)
(72) Erfinder: Elhaus, Uwe, 75365 Calw (DE); Ziegler, Werner, 75365 Calw (DE)
(74) Vertreter: DREISS Patentanwälte PartG mbB

(56) Entgegenhaltungen:
- EP-A1- 1 231 168
- EP-A1- 1 798 171
- DE-A1- 2 655 346
- DE-B- 1 080 287
- DE-U- 6 606 703
- US-A- 1 339 051

## Beschreibung

Die Erfindung betrifft eine Plattenaufteilanlage zum Aufteilen von plattenförmigen Werkstücken sowie ein Verfahren zu deren Betreiben nach den Oberbegriffen der nebengeordneten Patentansprüche.

Eine derartige Vorrichtung und ein derartiges Verfahren sind beispielsweise aus der EP 1 964 653 A1 bekannt. Diese beschreibt eine Plattenaufteilanlage mit einer Plattenaufteilsäge und zwei Vorschubeinrichtungen, welche Werkstücke der Plattenaufteilsäge zuführen können. Die eine Vorschubeinrichtung umfasst einen portalartigen Programmschieber, an dem eine Mehrzahl von Spannzangen angeordnet sind. Die andere Vorschubeinrichtung umfasst einen seitlich angeordneten Schlitten, an dem eine Spannzange befestigt ist. Die beiden Vorschubeinrichtungen können unabhängig voneinander betrieben werden, beispielsweise um bei einem Sägeschnitt an unterschiedlichen Werkstücken unterschiedliche Schnittbilder zu erzeugen.

Eine Plattenaufteilanlage mit zwei miteinander koppelbaren Vorschubeinrichtungen ist ferner in der nachveröffentlichten EP 2 251 128 A1 offenbart. Darüber hinaus offenbaren das DE 66 06 703 U, die EP 1 231 168 A1 und die DE 10 80 287 B Anlagen mit parallelen Förderbändern. Bei den Vorrichtungen gemäß DE 66 06 703 U und DE 10 80 287 B können benachbarte Förderbänder starr miteinander gekoppelt werden. EP 1 231 168 A1 beschreibt eine Möglichkeit, die benachbarten Förderbänder elektronisch im Gleichtakt zu betreiben.

Aufgabe der vorliegenden Erfindung ist es, eine Plattenaufteilanlage und ein Verfahren zu deren Betreiben bereitzustellen, mit denen eine besonders hohe Maßgenauigkeit und Winkelgenauigkeit am fertigen Werkstück möglich ist.

Diese Aufgabe wird durch eine Plattenaufteilanlage und ein Verfahren zu deren Betreiben mit den Merkmalen der beiden nebengeordneten Ansprüchen gelöst. Vorteilhafte Weiterbildungen der Erfindung sind in Unteransprüchen angegeben. Darüber hinaus finden sich für die Erfindung wichtige Merkmale in der nachfolgenden Beschreibung und in der Zeichnung.

Die mechanische Kopplung der beiden Vorschubeinrichtungen gestattet es, ein einziges großes Werkstück mit beiden

Vorschubeinrichtungen zu greifen und zu fördern, ohne dass es durch unterschiedliche Beschleunigungen, Geschwindigkeiten oder zurückgelegte Fahrwege der beiden Vorschubeinrichtungen zu einer Querstellung des plattenförmigen Werkstücks und hierdurch zu Maßungenauigkeiten und Winkelungenauigkeiten kommt. Statt dessen wird durch die Erfindung gewährleistet, dass die beiden Vorschubeinrichtungen in einem solchen Fall immer exakt synchron zueinander fahren. Sollen die beiden Vorschubeinrichtungen für einen bestimmten Anwendungsfall wieder unabhängig voneinander betrieben werden, ist jedoch erfindungsgemäß auch eine Entkopplung der beiden Vorschubeinrichtungen wieder möglich. Die enorme Flexibilität einer solchen Anlage bleibt also erhalten, bei gleichzeitig hervorragendem Arbeitsergebnis. Erfindungsgemäß wird jedoch ganz ausdrücklich nur eine Koppelung in Vorschubrichtung herbeigeführt, wohingegen die beiden anderen Raumrichtungen zumindest im Wesentlichen frei sind. Hierdurch wird die Möglichkeit eines Toleranzausgleichs geschaffen, durch den die Kräfte beim Kupplungs- und Zentriervorgang der Koppeleinrichtung minimiert werden, wodurch entsprechende Verformungen an den beiden Vorschubeinrichtungen minimiert und letztlich wiederum die Maßgenauigkeit an dem hergestellten Werkstück optimiert wird.

Die speziellen Ausgestaltungsmöglichkeiten der Koppeleinrichtung sind mannigfaltig: So ist es besonders bevorzugt, wenn die erste Vorschubeinrichtung einen ersten in Vorschubrichtung beweglichen Träger und mindestens eine erste an dem ersten Träger mindestens mittelbar befestigte Spannzange und die zweite Vorschubeinrichtung eine zweiten in Vorschubrichtung beweglichen Träger und mindestens eine an dem zweiten Träger mindestens mittelbar befestigte zweite Spannzange umfasst, und dass die Koppeleinrichtung entweder den ersten Träger mit dem zweiten Träger, den ersten Träger mit der zweiten Spannzange, dem zweiten Träger mit der ersten Spannzange, oder die erste Spannzange mit der zweiten Spannzange koppeln kann. Jede der dargestellten Alternativen hat ihre spezifischen Vor- und Nachteile.

Eine weitere Ausgestaltung der Erfindung sieht vor, dass die Koppeleinrichtung eine Verriegelungseinrichtung an der ersten Vorschubeinrichtung und eine Mitnehmereinrichtung an der zweiten Vorschubeinrichtung umfasst, wobei die Verriegelungseinrichtung ein Verriegelungselement und die Mitnehmereinrichtung einen Mitnehmerabschnitt aufweisen, und wobei das Verriegelungselement in den Mitnehmerabschnitt eingreifen kann. Eine solche mechanische Kopplung mit Verriegelungselement und Mitnehmerabschnitt ist einfach realisierbar und im Betrieb robust. Sie kann unter Umständen sogar bei bestehenden Anlagen nachgerüstet werden.

Als Verriegelungselement wird ein verschiebliches Zapfenelement vorgeschlagen, was ebenfalls zur Robustheit der Gesamtvorrichtung beiträgt.

Besonders vorteilhaft ist es, wenn der Mitnehmerabschnitt in Bewegungsrichtung des Verriegelungselements bewegliche Wandabschnitte umfasst, welche mit dem Verriegelungselement zusammenwirken. Hierdurch wird vor allem ein Verschleiß durch Reibung zwischen dem Verriegelungselement und dem Mitnehmerabschnitt beim Koppelungs- und Entkoppelungsvorgang vermieden oder zumindest reduziert. Auch die für den Koppelungs- bzw. Entkoppelungsvorgang erforderlichen Kräfte werden reduziert, so dass hierfür beispielsweise kleinere Stellzylinder eingesetzt werden können.

Eine konstruktiv einfache Lösung zur Realisierung der beweglichen Wandabschnitte besteht darin, dass diese durch mindestens zwei drehbare Rollenelemente gebildet werden, zwischen die das Verriegelungselement eingreifen kann. In diesem Zusammenhang wird auch vorgeschlagen, dass die Achsen der Rollenelemente exzentrisch gelagert sind. Dies gestattet es, beispielsweise bei der Montage der Anlage die Rollenelemente so zu justieren, dass diese weitgehend spielfrei mit dem Verriegelungselement zusammenwirken. Auch hierdurch wird Verschleiß im Betrieb vermieden, und es wird die Positioniergenauigkeit und somit letztendlich die Maßgenauigkeit am hergestellten Werkstück verbessert.

In eine ähnliche Richtung geht jene Weiterbildung, wonach die Position des Verriegelungselements an der ersten Vorschubeinrichtung und/oder die Position des Mitnehmerabschnitts an der zweiten Vorschubeinrichtung in einer Richtung parallel zur Vorschubeinrichtung einstellbar ist. Dies hat insbesondere dann Vorteile, wenn die Vorschubeinrichtung Greifelemente in Form von Spannzangen aufweist, welche üblicherweise wiederum Anschläge aufweisen, an denen die in Vorschubrichtung gesehen hintere Kante des Werkstücks bzw. des Werkstückstapels in Anlage kommt. Um sicherzustellen, dass diese Anschläge sowohl der ersten Vorschubeinrichtung als auch der zweiten Vorschubeinrichtung exakt zueinander ausgerichtet sind bzw. exakt fluchten, kann durch diese Maßnahme eine Justierung der Relativposition der beiden Vorschubeinrichtungen zueinander im gekoppelten Zustand erfolgen. Diese Justierung wird ebenfalls bei der Montage der Anlage vorgenommen, sie kann selbstverständlich aber auch von Zeit zu Zeit wiederholt werden, um im Betrieb aufgetretene Spiele oder Verschleiß zu kompensieren.

Der Einsatz der Koppeleinrichtung erfolgt vorzugsweise programmgesteuert durch eine Steuer- und/oder Regeleinrichtung, so dass manuelle Eingriffe nicht erforderlich sind. Hierdurch wird zum einen die Arbeitssicherheit verbessert, aber auch die Taktgeschwindigkeit der Plattenaufteilanlage erhöht. Nachfolgend wird eine Ausführungsform der vorliegenden Erfindung beispielhaft anhand der beiliegenden Zeichnung erläutert. In dieser zeigen:
- Figur 1: eine schematische Draufsicht auf eine Plattenaufteil¬anlage mit zwei Vorschubeinrichtungen und einer Koppeleinrichtung; und
- Figur 2: eine perspektivische Darstellung der Koppeleinrichtung von Figur 1.

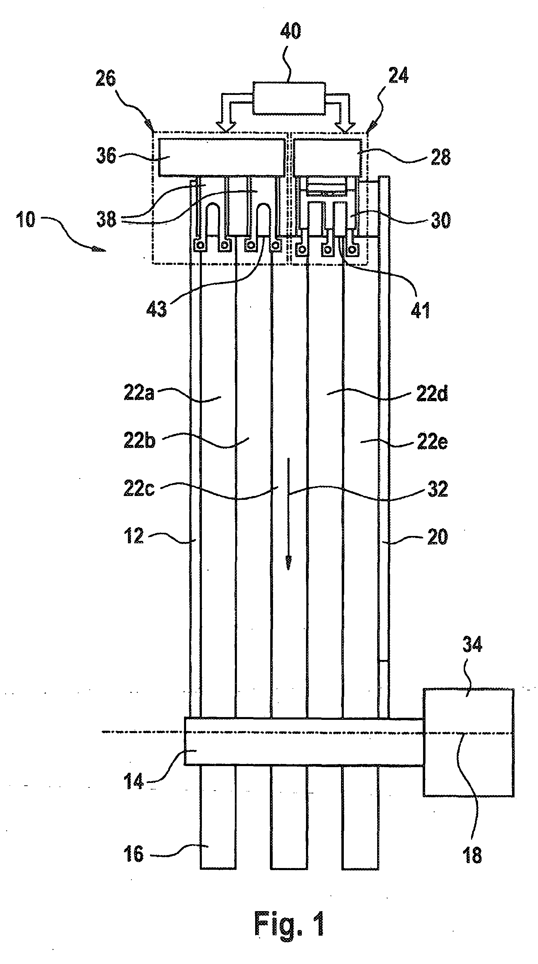

Eine Plattenaufteilanlage trägt in Figur 1 insgesamt das Bezugszeichen 10. Sie umfasst einen Zuführtisch 12, der im Allgemeinen durch eine Mehrzahl von Rollenbahnen gebildet wird, einen Maschinentisch 14 und einen Entnahmetisch 16. Im Maschinentisch 14 ist ein in der Zeichnung nicht gezeigter Sägewagen untergebracht, der beispielsweise eine Vorritzsäge und eine Hauptsäge, erforderlichenfalls aber auch noch andere Werkzeuge tragen kann. Der Sägewagen ist längs einer in Figur 1 strichpunktiert dargestellten Sägelinie 18 beweglich. Oberhalb von dem Maschinentisch 14 ist normalerweise ein Druckbalken angeordnet, durch den die Werkstücke während des Sägevorgangs zwischen Druckbalken und Maschinentisch 14 verklemmt werden. Dieser ist aus Darstellungsgründen in Figur 1 jedoch nicht gezeigt. Der Zuführtisch weist an seinem in Figur 1 rechten Rand ein Winkellineal 20 auf, welches zur Anlage und Ausrichtung der auf dem Zuführtisch 12 liegenden Werkstücke dient. Vorliegend sind auf dem Zuführtisch 12 fünf längliche streifenartige Werkstücke 22a bis 22e dargestellt, die von zwei Vorschubeinrichtungen 24 und 26, auf die nachfolgend noch näher eingegangen werden wird, der Säge zugeführt werden, um längs der Sägelinie 18 sukzessive in einzelne Stücke aufgeteilt zu werden.

Die erste Vorschubeinrichtung 24 umfasst einen ersten Träger 28, an dem, zum Maschinentisch 14 hin, eine erste Spannzange 30 befestigt ist. Die Bewegungsrichtung des ersten Trägers 28 zum Maschinentisch 14 hin ist die Vorschubrichtung, welche in Figur 1 durch einen Pfeil 32 bezeichnet ist. Es versteht sich, dass die erste Vorschubeinrichtung 24 natürlich auch entgegen der Vorschubrichtung 32 bewegt werden kann. Der erste Träger 28 ist hierzu an einer in Figur 1 nicht gezeigten, sich längs der Vorschubrichtung 32 erstreckenden Schiene beweglich befestigt, wobei die Schiene an einer portalartigen und in Figur 1 ebenfalls nicht gezeigten Konstruktion oberhalb von dem Zuführtisch 12 angeordnet ist. Die Bewegung des ersten Trägers 28 wird beispielsweise elektromotorisch bewirkt und gesteuert von einer Steuer- und Regeleinrichtung 34.

Die zweite Vorschubeinrichtung 26 ist ganz ähnlich zur ersten Vorschubeinrichtung 24 aufgebaut: Sie umfasst einen zweiten Träger 36, an dem zwei zweite Spannzangen 38 befestigt sind. Auch der zweite Träger 36 ist an einer in der Figur nicht gezeigten, sich parallel zur Vorschubrichtung 32 erstreckenden Schiene befestigt, so dass er sowohl in Vorschubrichtung 32 als auch entgegen dieser Vorschubrichtung 32 bewegt werden kann. Wie aus Figur 1 ersichtlich ist, sind die erste Vorschubeinrichtung 24 und die zweite Vorschubeinrichtung 26 nebeneinander angeordnet.

Im Betrieb der Plattenaufteilanlage 10 können die beiden Vorschubeinrichtungen 24 und 26 unabhängig voneinander bewegt werden. Somit kann ein von der ersten Vorschubeinrichtung 24 gegriffenes Werkstück simultan zu einem von der zweiten Vorschubeinrichtung 26 gegriffenen Werkstück der Sägelinie 18 zur Aufteilung zugeführt werden, wobei an beiden Werkstücken beim gleichen Sägeschnitt unterschiedliche Schnittbilder realisiert werden können. Im Einzelnen wird diesbezüglich beispielsweise auf die EP 1 964 652 A1 verwiesen, in der ein derartiges Verfahren im Detail beschrieben ist.

Möglich ist aber auch, dass ein Werkstück der Sägelinie 18 zugeführt werden soll, welches von beiden Vorschubeinrichtungen 24 und 26 gegriffen werden muss, wie vorliegend der Plattenstreifen 22c. Um sicherzustellen, dass die beiden Vorschubeinrichtungen 24 und 26 sowohl zu Beginn, als auch während der Bewegung, und bis zum Ende der Bewegung in einer gewünschten Weise zueinander ausgerichtet sind und es auch bleiben, verfügt die Plattenaufteilanlage 10 über eine Koppeleinrichtung 40, mit der die beiden Vorschubeinrichtungen 24 und 26 in einer Richtung parallel zur Vorschubrichtung 32 wahlweise mechanisch miteinander gekoppelt bzw. voneinander entkoppelt werden können. Diese Koppelung ist dabei zumindest in der Vorschubrichtung 32 vollkommen starr.

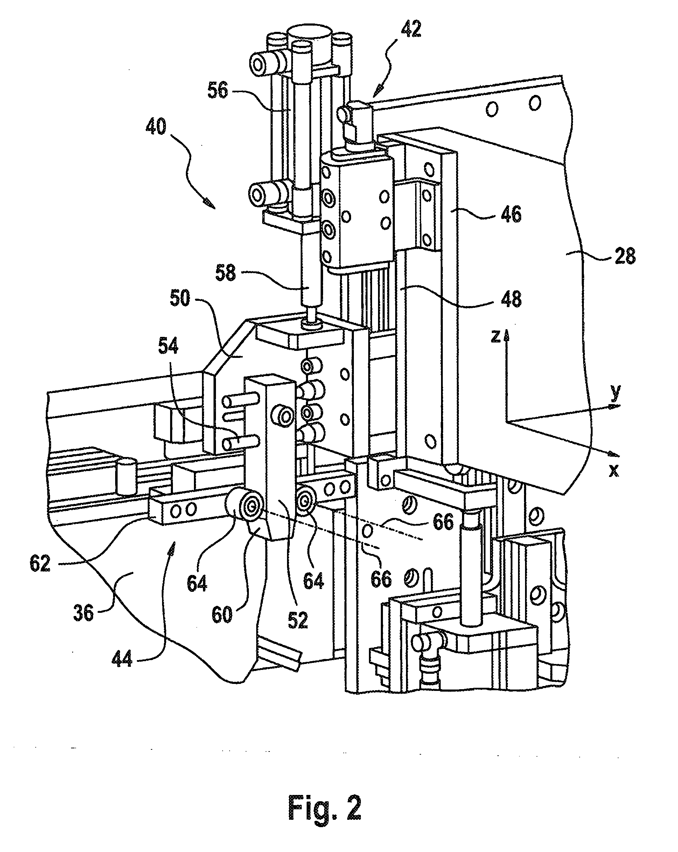

Die Koppelung erfolgt dabei vorzugsweise so, dass hintere Anschläge 41 und 43 der ersten und zweiten Spannzangen 30 und 38 exakt miteinander fluchten. Eine mögliche konkrete Ausgestaltung der Koppeleinrichtung 40 wird nun unter Bezugnahme auf Figur 2 erläutert. Dabei ist diese Koppeleinrichtung 40 so ausgeführt, dass sie die beiden Träger 28 und 36 starr miteinander koppelt. In nicht gezeigten Ausführungsformen wird durch die Koppeleinrichtung der erste Träger mit einer der zweiten Spannzangen, der zweite Träger mit der ersten Spannzange, oder es werden die erste Spannzange mit einer der beiden zweiten Spannzangen miteinander gekoppelt.

Die Koppeleinrichtung 40 weist eine Verriegelungseinrichtung 42 und eine Mitnehmereinrichtung 44 auf. Die Verriegelungseinrichtung 42 ist am ersten Träger 28, die Mitnehmereinrichtung 44 am zweiten Träger 36 befestigt. Die Verriegelungseinrichtung 42 umfasst einen Halter 46, der am ersten Träger 28 beispielsweise verschraubt ist. Auf dem plattenförmigen Halter 46 ist eine Linearführung 48 befestigt, die mit einem Winkelelement 50 gekoppelt ist. Auf diese Weise kann das Winkelelement 50 gegenüber dem Halter 46 vertikal (z-Richtung) verschoben werden. An dem Winkelement 50 ist ein sich insgesamt im Wesentlich vertikal sich erstreckendes Zapfenelement 52 befestigt. Die Befestigung erfolgt hierbei über Befestigungsstifte 54, welche eine Justierung der Relativposition des Zapfenelements 52 zum Winkelelement 50 in y-Richtung (entsprechend der Vorschubrichtung 32) ermöglichen. Dies gestattet eine Justierung so, dass die Anschläge 41 und 43 bei gekoppelten Vorschubeinrichtungen 24 und 26 fluchten.

An dem Halter 46 ist auch ein Pneumatikzylinder 56 befestigt, dessen Kolbenstange 58 wiederum mit dem Winkelelement 50 verbunden ist. Durch eine Betätigung des Pneumatikzylinders 56 wird somit eine Bewegung des Winkelelements 50 parallel zur z-Achse und in der Folge eine entsprechende Bewegung des Zapfenelements 52 bewirkt. Das Zapfenelement 52 ist übrigens, wie aus Figur 2 ersichtlich ist, an seinem in dieser Figur unteren Ende mit beidseitigen Schrägen 60 ausgeführt, auf deren Funktion nachher noch eingegangen werden wird.

Die am zweiten Träger 36 befestigte Mitnehmereinrichtung 44 umfasst ebenfalls einen Halter 62, der am zweiten Träger 36 beispielsweise verschraubt ist. Auf diesem Halter 62 sind zwei zylindrische Rollenelemente 64 angeordnet, deren Drehachse parallel zur x-Achse (also parallel zur Sägelinie 18) verläuft. Die Rollenelemente 64 können beispielsweise durch die äußeren Schalen üblicher Kugellager gebildet werden. Die in Figur 2 durch strichpunktierte Linien angedeuteten Drehachsen 66 der Rollenelemente 64 sind auf nicht gezeigten, im Halter 62 drehbar gelagerten Sockeln exzentrisch befestigt, so dass deren Position in y―Richtung durch Drehen der Sockel eingestellt werden kann. Auf diese Weise kann der Spalt zwischen den beiden Rollenelementen 64 genau auf die entsprechende Breite des Zapfenelements 52 eingestellt werden, so dass dieses im Koppelfalle spielfrei zwischen den Rollenelementen 64 aufgenommen ist.

Die Plattenaufteilanlage 10 mit der im Übrigen ebenfalls von der Steuer- und Regeleinrichtung 34 angesteuerten Koppeleinrichtung 40 arbeitet folgendermaßen: Sollen die beiden Vorschubeinrichtungen 24 und 26 unabhängig voneinander arbeiten können, ist eine mechanische Kopplung zwischen den beiden Vorschubeinrichtungen 24 und 26 nicht erwünscht. In diesem Fall wird der Pneumatikzylinder 56 von der Steuer- und Regeleinrichtung 34 so angesteuert, dass die Kolbenstange 58 in ihrer oberen Endposition ist. Dies bedeutet, dass sich auch das Zapfenelement 52 in seiner in Figur 2 oberen Endposition befindet und nicht in den Spalt zwischen den beiden Rollenelementen 64 eingreift.

Um die mechanisch starre Kopplung parallel zur Vorschubrichtung 32 zwischen der ersten Vorschubeinrichtung 24 und der zweiten Vorschubeinrichtung 26 herzustellen, wird dann, wenn die beiden Träger 28 und 36 in etwa nebeneinander, also in Vorschubrichtung 32 gesehen auf gleicher Höhe angeordnet sind, von der Steuer- und Regeleinrichtung 34 der Pneumatikzylinder 56 so angesteuert, dass das Zapfenelement 52 in Figur 2 nach unten in den zwischen den beiden Rollenelementen 64 gebildeten Spalt fährt. Durch die endseitigen Schrägen 60 am Zapfenelement 52 wird hierbei ein möglicherweise hierbei zunächst noch vorhandener Versatz zwischen den Anschlägen 41 und 43 einerseits der ersten Spannzange 30 und andererseits den zweiten Spannzangen 38 beseitigt. Dieser Zustand, in dem die beiden Vorschubeinrichtungen 24 und 26 miteinander gekoppelt sind, ist in Figur 2 dargestellt. Wie aus dieser Figur ohne Weiteres ersichtlich ist, wirkt die Koppelung lediglich in einer Richtung parallel zur y― bzw. Vorschubrichtung 32. In vertikaler Richtung (z-Richtung) ist eine Relativbewegung zwischen erstem Träger 28 und zweitem Träger 36 ebenso möglich wie, zumindest in gewissem Umfange, auch in x-Richtung.

## Patentansprüche

1. Plattenaufteilanlage (10) zum Aufteilen von plattenförmigen Werkstücken (22), mit einer ersten Vorschubeinrichtung (24) und einer zweiten Vorschubeinrichtung (26), welche nebeneinander angeordnet sind, um auf einem Zuführtisch (12) liegende Werkstücke (22) in und gegebenenfalls auch entgegen einer Vorschubrichtung (32) zu bewegen, wobei sie eine Koppeleinrichtung (40) umfasst, mit der die beiden Vorschubeinrichtungen (24, 26) in einer Richtung parallel zur Vorschubrichtung (32) wahlweise mechanisch miteinander gekoppelt bzw. voneinander entkoppelt werden können, **dadurch gekennzeichnet, dass** die Koppeleinrichtung (40) die erste Vorschubeinrichtung (24) und die zweite Vorschubeinrichtung (26) in mindestens einer zur Vorschubrichtung (32) orthogonalen Richtung, nämlich vertikalen Richtung, nicht koppelt.

2. Plattenaufteilanlage (10) nach Anspruch 1, **dadurch gekennzeichnet, dass** die erste Vorschubeinrichtung (24) einen ersten in Vorschubrichtung (32) beweglichen Träger (28) und mindestens eine erste an dem ersten Träger (28) mindestens mittelbar befestigte Spannzange (30) und die zweite Vorschubeinrichtung (26) einen zweiten in Vorschubrichtung (32) beweglichen Träger (36) und mindestens eine an dem zweiten Träger (36) mindestens mittelbar befestigte zweite Spannzange (38) umfasst, und dass die Koppeleinrichtung (40) entweder den ersten Träger (28) mit dem zweiten Träger (36), den ersten Träger mit der zweiten Spannzange, den zweiten Träger mit der ersten Spannzange, oder die erste Spannzange mit der zweiten Spannzange koppeln kann.

3. Plattenaufteilanlage (10) nach einem der vorhergehenden Ansprüche, **dadurch gekennzeichnet, dass** die Koppeleinrichtung (40) eine Verriegelungseinrichtung (42) an der ersten Vorschubeinrichtung (24) und eine Mitnehmereinrichtung (44) an der zweiten Vorschubeinrichtung (26) umfasst, wobei die Verriegelungseinrichtung (42) ein Verriegelungselement (52) und die Mitnehmereinrichtung (44) einen Mitnehmerabschnitt (64) aufweisen, und wobei das Verriegelungselement (52) in den Mitnehmerabschnitt (64) eingreifen kann.

4. Plattenaufteilanlage (10) nach Anspruch 3, **dadurch gekennzeichnet, dass** das Verriegelungselement ein verschiebliches Zapfenelement (52) umfasst.

5. Plattenaufteilanlage (10) nach einem der Ansprüche 3 oder 4, **dadurch gekennzeichnet, dass** der Mitnehmerabschnitt zwei in Bewegungsrichtung des Verriegelungselements (52) bewegliche Wandabschnitte (64) umfasst, welche mit dem Verriegelungselement (52) zusammenwirken.

6. Plattenaufteilanlage (10) nach Anspruch 5, **dadurch gekennzeichnet, dass** die beweglichen Wandabschnitte durch mindestens zwei drehbare Rollenelemente (64) gebildet werden, zwischen die das Verriegelungselement (52) eingreifen kann.

7. Plattenaufteilanlage (10) nach Anspruch 6, **dadurch gekennzeichnet, dass** die Achsen (66) der Rollenelemente (64) exzentrisch gelagert sind.

8. Plattenaufteilanlage (10) nach einem der Ansprüche 3 bis 6, **dadurch gekennzeichnet, dass** die Position des Verriegelungselements (52) an der ersten Vorschubeinrichtung (24) und/oder die Position des Mitnehmerabschnitts an der zweiten Vorschubeinrichtung in einer Richtung parallel zur Vorschubrichtung (32) einstellbar ist.

9. Plattenaufteilanlage (10) nach einem der vorhergehenden Ansprüche, **dadurch gekennzeichnet, dass** sie eine Steuer- und/oder Regeleinrichtung (34) aufweist, welche die Koppeleinrichtung (40) ansteuert.

10. Verfahren zum Betreiben einer Plattenaufteilanlage (10) nach einem der vorhergehenden Ansprüche, **dadurch gekennzeichnet, dass** es folgende Schritte umfasst:
a. Betreiben der mindestens zwei Vorschubeinrichtungen (24, 26) der Plattenaufteilanlage (10) unabhängig voneinander;
b. Herstellen einer mechanischen Koppelung zwischen mindestens zwei Vorschubeinrichtungen (24, 26) in einer Richtung parallel zur Vorschubrichtung (32), ohne eine Kopplung in vertikaler Richtung herzustellen;
c. Betreiben der beiden gekoppelten Vorschubeinrichtungen (24, 26);
d. Lösen der mechanischen Koppelung zwischen den beiden Vorschubeinrichtungen (24, 26).

11. Verfahren nach Anspruch 10, **dadurch gekennzeichnet, dass** die Schritte b und d ferngesteuert werden.

## Claims

1. Plate, sheet or panel cutting-up system (10), for cutting up workpieces (22) in plate, sheet or panel form, having a first advancer device (24) and a second advancer device (26) which are arranged next to one another, to move workpieces (22) lying on a infeed table (12) in a direction of advance (32) and if required in the opposite direction therefrom, the system comprising a coupling means (40) by which the two advancer devices (24, 26) can, as desired, be coupled together or uncoupled from one another mechanically in a direction parallel to the direction of advance (32), **characterised in that** the coupling means (40) does not couple the first advancer device (24) and the second advancer device (26) in at least one direction orthogonal to the direction of advance (32), namely the vertical direction.

2. Plate, sheet or panel cutting-up system (10) according to claim 1, **characterised in that** the first advancer device (24) comprises a first beam (28) which is movable in the direction of advance (32) and at least one first pincer-action clamp (30) which is at least indirectly fastened to the first beam (28), and the second advancer device (26) comprises a second beam (36) which is movable in the direction of advance (32) and at least one second pincer-action clamp (38) which is at least indirectly fastened to the second beam (36), and **in that** the coupling means (40) is able to couple either the first beam (28) to the second beam (36) or the first beam to the second pincer-action clamp or the second beam to the first pincer-action clamp or the first pincer-action clamp to the second pincer-action clamp.

3. Plate, sheet or panel cutting-up system (10) according to either of the preceding claims, **characterised in that** the coupling means (40) comprises a locking means (42) on the first advancer device (24) and an entraining means (44) on the second advancer device (26), the locking means (43) having a locking member (52) and the entraining means (44) having an entraining portion (64), and the locking member (52) being able to engage in the entraining portion (64).

4. Plate, sheet or panel cutting-up system (10) according to claim 3, **characterised in that** the locking member comprises a displaceable spigot member (52).

5. Plate, sheet or panel cutting-up system (10) according to either of claims 3 and 4, **characterised in that** the entraining portion comprises two wall portions (64) which are movable in the direction of movement of the locking member (52) and which co-operate with the locking member (52).

6. Plate, sheet or panel cutting-up system (10) according to claim 5, **characterised in that** the movable wall portions are formed by at least two rotatable roller members (64) between which the locking member (52) is able to engage.

7. Plate, sheet or panel cutting-up system (10) according to claim 6, **characterised in that** the axes (66) of the roller members (64) are eccentrically mounted.

8. Plate, sheet or panel cutting-up system (10) according to one of claims 3 to 6, **characterised in that** the position of the locking member (52) on the first advancer device (24) and/or the position of the entraining portion on the second advancer device can be set in a direction parallel to the direction of advance (32).

9. Plate, sheet or panel cutting-up system (10) according to one of the preceding claims, **characterised in that** it has a control and/or regulating device (34) which actuates the coupling means (40).

10. Method of operating a plate, sheet or panel cutting-up system (10) according to one of the preceding claims, **characterised in that** it comprises the following steps:
a. operation of the at least two advancer devices (24, 26) of the plate, sheet or panel cutting-up system (10) independently of one another,
b. establishment of mechanical coupling between at least two advancer devices (24, 26) in a direction parallel to the direction of advance (32) without coupling being established in the vertical direction,
c. operation of the two coupled advancer devices (24, 26),
d. release of the mechanical coupling between the two advancer devices (24, 26).

11. Method according to claim 10, **characterised in that** steps b and d are remotely controlled.

## Revendications

1. Installation de répartition de plaques (10) destinée à répartir des pièces à usiner en forme de plaques (22), comprenant un premier dispositif d'amenée (24) et un deuxième dispositif d'amenée (26) qui sont agencés l'un à côté de l'autre pour déplacer des pièces à usiner (22) reposant sur une table d'alimentation (12) dans une direction d'amenée (32), et le cas échéant également à l'opposé de cette direction, étant entendu qu'elle comprend un dispositif de couplage (40) avec lequel les deux dispositifs d'amenée (24, 26) peuvent être couplés l'un avec l'autre ou découplés l'un de l'autre mécaniquement, au choix, dans une direction parallèle à la direction d'amenée (32), **caractérisée en ce que** le dispositif de couplage (40) ne couple pas le premier dispositif d'amenée (24) et le deuxième dispositif d'amenée (26) dans au moins une direction orthogonale par rapport à la direction d'amenée (32), à savoir une direction verticale.

2. Installation de répartition de plaques (10) selon la revendication 1, **caractérisée en ce que** le premier dispositif d'amenée (24) comprend un premier support (28) mobile dans la direction d'amenée (32) et au moins une première pince de serrage (30) fixée au moins indirectement sur le premier support (28) et le deuxième dispositif d'amenée (26) comprend un deuxième support (36) mobile dans la direction d'amenée (32) et au moins une deuxième pince de serrage (38) fixée au moins indirectement sur le deuxième support (36) et **en ce que** le dispositif de couplage (40) peut coupler le premier support (28) avec le deuxième support (36), le premier support avec la deuxième pince de serrage, le deuxième support avec la première pince de serrage ou la première pince de serrage avec la deuxième pince de serrage.

3. Installation de répartition de plaques (10) selon l'une des revendications précédentes, **caractérisée en ce que** le dispositif de couplage (40) comprend un dispositif de verrouillage (42) sur le premier dispositif d'amenée (24) et un dispositif de saisie (44) sur le deuxième dispositif d'amenée (26), étant entendu que le dispositif de verrouillage (42) présente un élément de verrouillage (52) et le dispositif de saisie (44) présente une section de saisie (64) et étant entendu que l'élément de verrouillage (52) peut s'engager dans la section de saisie (64).

4. Installation de répartition de plaques (10) selon la revendication 3, **caractérisée en ce que** l'élément de verrouillage comprend un élément de cheville coulissant (52).

5. Installation de répartition de plaques (10) selon l'une des revendications 3 ou 4, **caractérisée en ce que** la section de saisie comprend deux sections de paroi (64) mobiles dans la direction de déplacement de l'élément de verrouillage (52), qui coopèrent avec l'élément de verrouillage (52).

6. Installation de répartition de plaques (10) selon la revendication 5, **caractérisée en ce que** les sections de paroi mobiles sont formées par au moins deux éléments de rouleaux rotatifs (64), entre lesquels l'élément de verrouillage (52) peut s'engager.

7. Installation de répartition de plaques (10) selon la revendication 6, **caractérisée en ce que** les axes (66) des éléments de rouleaux (64) sont positionnés de façon excentrique.

8. Installation de répartition de plaques (10) selon l'une des revendications 3 à 6, **caractérisée en ce que** la position de l'élément de verrouillage (52) sur le premier dispositif d'amenée (24) et/ou la position de la section de saisie sur le deuxième dispositif d'amenée peuvent être réglée dans une direction parallèle à la direction d'amenée (32).

9. Installation de répartition de plaques (10) selon l'une des revendications précédentes, **caractérisée en ce qu'**elle présente un dispositif de commande et/ou de réglage (34) qui commande le dispositif de couplage (40).

10. Procédé d'utilisation d'une installation de répartition de plaques (10) selon l'une des revendications précédentes, **caractérisé en ce qu'**il comprend les étapes suivantes :
a. utilisation des au moins deux dispositifs d'amenée (24, 26) de l'installation de répartition de plaques (10) indépendamment l'un de l'autre ;
b. réalisation d'un couplage mécanique entre au moins deux dispositifs d'amenée (24, 26) dans une direction parallèle à la direction d'amenée (32) sans réaliser une couplage dans une direction verticale ;
c. utilisation des deux dispositifs d'amenée (24, 26) couplés ;
d. dissociation du couplage mécanique entre les deux dispositifs d'amenée (24, 26).

11. Procédé selon la revendication 10, **caractérisé en ce que** les étapes b et d sont commandées à distance.
